# EUROPÄISCHE PATENTSCHRIFT

(11) **EP 3 747 839 B1**
(45) Veröffentlichungstag und Bekanntmachung des Hinweises auf die Patenterteilung: **16.08.2023**
(21) Anmeldenummer: 20176363.8
(22) Anmeldetag: 25.05.2020
(51) Int. Cl.: C03C 3/095, C03C 3/097, C03C 4/02, C03C 10/00, F24C 15/00

(54) **GLASKERAMIK, VERFAHREN ZU DEREN HERSTELLUNG UND DEREN VERWENDUNG**
GLASS CERAMIC, METHOD FOR THEIR PREPARATION AND THEIR USE
VITROCÉRAMIQUE, SON PROCÉDÉ DE FABRICATION ET SON UTILISATION

(30) Priorität: 05.06.2019 DE 102019115153
(43) Veröffentlichungstag der Anmeldung: 09.12.2020
(73) Patentinhaber: SCHOTT AG, 55122 Mainz (DE)
(72) Erfinder: SIEBERS, Friedrich, 55283 Nierstein (DE); WEISS, Evelin, 55131 Mainz (DE); HOCHREIN, Oliver, 55130 Mainz (DE)
(74) Vertreter: Blumbach · Zinngrebe Patentanwälte PartG mbB

(56) Entgegenhaltungen:
- EP-A1- 3 000 793
- DE-A1- 2 844 030
- DE-A1- 2 844 030
- DE-A1-102018 110 908
- DE-U1-202020 001 408

## Beschreibung

### Gebiet der Erfindung

Die Erfindung betrifft eine Glaskeramik, insbesondere eine transparente, gefärbte, insbesondere volumengefärbte Glaskeramik, speziell eine transparente, gefärbte, insbesondere volumengefärbte Glaskeramik mit neutralem Farbort, sowie ein Verfahren zur Herstellung einer solchen Glaskeramik und deren Verwendung.

### Hintergrund der Erfindung

Glaskeramiken, insbesondere Lithium-Aluminium-Silikat-Glaskeramiken, sind bekannte Materialien. Hergestellt werden solche Lithium-Aluminium-Silikat-Glaskeramiken unter Erschmelzen eines kristallisierbaren Glases (oder Grünglases), welches als Komponenten Lithiumoxid Li₂O, Aluminiumoxid Al₂O₃ sowie Siliziumoxid SiO₂ umfasst. Solche Grüngläser bzw. solche Glaskeramiken werden auch als LAS-Gläser oder LAS-Glaskeramiken bezeichnet. Unter LAS-Gläsern oder LAS-Grüngläsern werden hierbei solche Gläser verstanden, welche einer steuerbaren, insbesondere einer gesteuerten, Kristallisation zugänglich sind, sodass ein kristallisiertes Glas bzw. eine Glaskeramik erhalten wird, welche als Hauptkristallphase Hochquarz-Mischkristall und/oder Keatit-Mischkristall aufweist. Hochquarz-Mischkristall wird im Rahmen der vorliegenden Anmeldung auch als "HQMK" abgekürzt, Keatit-Mischkristall auch als "KMK". Die Kristallphase "Hochquarz-Mischkristall" oder Hochquarz wird in der Literatur auch als β-Quarz oder β-Eukryptit bezeichnet. Keatit bzw. Keatit-Mischkristall wird in der Literatur auch als β-Spodumen bezeichnet. Diese Glaskeramiken zeichnen sich dadurch aus, dass sie eine nur geringe thermische Dehnung sowie eine hohe mechanische Festigkeit und Thermoschockbeständigkeit aufweisen. Solche Glaskeramiken werden auch als Lithium-Aluminium-Silikat-Glaskeramiken oder LAS-Glaskeramiken bezeichnet.

LAS-Glaskeramiken können als transparente Materialien vorliegen, wobei der Begriff des transparenten Materials hier so zu verstehen ist, dass ein transparentes Material eine geringe Streuung aufweist. Streuend ausgebildete Materialien werden auch als trüb bezeichnet.

Die Streuung von Glaskeramiken, insbesondere von LAS-Glaskeramiken, wird im Rahmen dieser Schrift durch Messung der Trübung (engl.: Haze) bestimmt. Die Trübung bezeichnet nach der ASTM D1003-13 den prozentualen Anteil des durch eine Probe durchgelassenen Lichts, welcher vom eingestrahlten Lichtbündel um mehr als 2,5° abweicht. Wenn der Haze-Wert mehr als 6 % beträgt, ist die Streuung in der Regel störend und visuell auffällig. In Glaskeramiken wird die Streuung insbesondere durch die Größe der in der Glaskeramik vorhandenen Kristallite, den Brechzahlunterschied zwischen der glasigen Matrix und den Kristallen sowie von Einschlüssen und Inhomogenitäten bestimmt. Eine geringe Streuung von Glaskeramiken ist insbesondere für solche Anwendungen notwendig, bei denen Anzeigeelemente durch die Glaskeramik hindurch möglichst konturenscharf wahrgenommen werden sollen.

Transparente Materialien, wie beispielsweise transparente LAS-Glaskeramiken, können sowohl gefärbt als auch ungefärbt vorliegen. Eine transparente, ungefärbte Glaskeramik, also beispielsweise eine transparente, ungefärbte LAS-Glaskeramik, ist transparent, weil sie eine geringe Streuung aufweist, und ungefärbt, weil bei ihrer Herstellung keine Färbemittel zugegeben wurden. Solche transparenten, ungefärbten Glaskeramiken, beispielsweise LAS-Glaskeramiken, können allerdings eine geringe Eigenfärbung aufweisen, beispielsweise durch Verunreinigungen wie beispielsweise Fe₂O₃. Es handelt sich hierbei allerdings lediglich um einen leichten "Farbstich", welcher auch gezielt minimiert werden kann, insbesondere durch Begrenzung von Verunreinigungen und/oder durch eine aktive Gegenfärbung. Bei diesen transparenten, ungefärbten Glaskeramiken ist ein hoher Lichttransmissionsgrad erwünscht, welcher üblicherweise mehr als 80% beträgt.

Im Gegensatz dazu sind transparente, gefärbte Glaskeramiken, wie beispielsweise eine transparente, gefärbte LAS-Glaskeramik, durch gezielte Zugabe eines oder mehrerer Färbemittel, beispielsweise einer oder mehrerer farbgebender Verbindungen, gefärbt. Diese Verbindungen absorbieren insbesondere im Sichtbaren. Solche transparenten, gefärbten Glaskeramiken werden beispielsweise als Kochflächen eingesetzt. Solche Glaskeramiken, insbesondere LAS-Glaskeramiken, können hier insbesondere durch färbende Metallionen gefärbt vorliegen, wofür auch der Begriff "volumengefärbt" verwendet wird. Bei der Verwendung solcher transparenten, gefärbten Glaskeramiken, insbesondere von LAS-Glaskeramiken, als Abdeckplatte, beispielsweise als Kochfläche, ist die Lichttransmission üblicherweise begrenzt. Der Lichttransmissionsgrad für eine Scheiben- bzw. Plattendicke von 4 mm wird hier auf Werte zwischen ca. 1% und 5 % eingestellt. Die Platte hat dann ein schwarzes Erscheinungsbild.

Sofern im Rahmen der vorliegenden Erfindung eine Glaskeramik als gefärbt bezeichnet wird, wird dabei, sofern dies nicht ausdrücklich anders ausgeführt ist, in der Regel eine durch färbende Metallionen volumengefärbte Glaskeramik verstanden.

Die gezielte Einstellung eines recht geringen Lichttransmissionsgrads zwischen etwa 1% und 5% hat zum einen den Hintergrund, dass auf diese Weise unterhalb bzw. hinter der Platte angeordnete Komponenten nicht störend wahrgenommen werden können. Im Betrieb beispielsweise eines Kochfelds kommt es dann aber auch nicht zur Blendung durch unterhalb der Kochfläche angeordnete Heizelemente. Trotzdem ist die Lichttransmission noch ausreichend, dass Leuchtelemente, beispielsweise LED, noch wahrgenommen werden. Ein solcher Lichttransmissionsgrad verbindet also ästhetische Belange mit einer ausreichenden Bedienersicherheit. Gegebenenfalls kann der Lichttransmissionsgrad ortsaufgelöst noch weiter vermindert werden, indem beispielsweise Maskierungen lokal auf die Glaskeramikplatte aufgebracht werden.

Der Farbort eines Materials kann durch die Angabe unterschiedlicher Größen in unterschiedlichen Farbsystemen beschrieben werden.

Im CIE-Farbsystem CIExyY, welches in der deutschen Norm DIN 5033 als Umsetzung der internationalen CIE-Norm beschrieben ist, werden aus gemessenen Werten der spektralen Transmission im Bereich von 380 nm bis 780 nm, welcher der Bereich des sogenannten sichtbaren Lichts des elektromagnetischen Spektrums ist, die Helligkeit Y (auch als brightness, Lichttransmission, integrale Transmission oder Lichttransmissionsgrad nach DIN EN 410 bezeichnet) sowie die Farbkoordinaten x und y für eine Lichtart mit definiertem Emissionsspektrum und Beobachterwinkel, welcher entweder 2° oder 10° sein kann, berechnet.

Jedes von einer Lichtquelle emittierte Licht besitzt also einen Farbort mit x- und y-Koordinaten. Der Unbuntpunkt liegt in diesem Farbsystem für Normlicht E bei Koordinaten von x und y bei jeweils 0,33. Für andere Normlicharten, wie beispielsweise D65, sind die Werte für x und y etwas abweichend von 0,33. Im Rahmen der vorliegenden Schrift werden die Begriffe der Helligkeit Y und des Lichttransmissionsgrades synonym verwendet.

Beim Durchtritt durch ein gefärbtes Material verändert sich in der Regel der Farbort. Man bestimmt also den Farbort von Licht vor und nach Durchtritt durch ein gefärbtes Medium, wie beispielsweise eine gefärbte, insbesondere eine volumengefärbte, Glaskeramik.

Es ist auch möglich, den Farbort im CIEL*a*b*-Farbsystem anzugeben, welches in der DIN EN ISO 11664-4 genormt ist, wobei als Maß für die Farbigkeit die Größe c* (Buntheit) herangezogen wird.

Farborte nach Durchtritt von Licht durch ein Medium wie beispielsweise eine Glaskeramikkönnen beispielsweise mit einem Farbortmessgerät ermittelt werden. Es ist aber auch möglich, den Farbort aus dem gemessenen Spektrum nach den Vorgaben der vorgenannten Normen der CIE zu berechnen, beispielsweise also aus einem Transmissionsspektrum einer Glaskeramik, welches für die Durchstrahlung der Glaskeramik mit einer Lichtquelle bekannten Spektrums (wie dem Normlicht D65) gemessen wird.

Transparente, gefärbte Glaskeramiken, insbesondere transparente, gefärbte, beispielsweise transparente volumengefärbte, LAS-Glaskeramiken, weisen häufig in Durchsicht eine Färbung auf, beispielsweise eine violette oder orange-braune Färbung auf. Beispielsweise beschreibt die deutsche Offenlegungsschrift DE 28 44 030 A1 ein Verfahren zur Herstellung von transparenten, getönten Glaskeramiken und solcherart hergestellte Glaskeramiken. Dabei werden rauchgraue, hellgelbe oder kastanien- oder bernsteinfarbene Färbungen erzeugt. Mit anderen Worten weisen solche gefärbten Glaskeramiken, beispielsweise volumengefärbte LAS-Glaskeramiken, in Durchsicht einen bunten Farbort auf. Dies hat zur Folge, dass Leuchtanzeigen, beispielsweise weiße LED, durch eine Glaskeramikplatte, also beispielsweise eine Platte aus einer LAS-Glaskeramik, hindurch farbverfälscht wahrgenommen werden. Eine weiße Anzeige ist dann also nicht mehr weiß, sondern weist einen anderen Farbton auf. Dies ist ungünstig, weil auf diese Weise weiße LED nicht eingesetzt werden können. Auch die Integration von mehrfarbigen Displays, insbesondere hochauflösenden Displays, bei denen die Bildpunkte farblich angesteuert werden, ist in diesem Fall nicht möglich. Dies schränkt die Bedienerfreundlichkeit sehr stark ein.

Aus diesem Grund sind mittlerweile auch farbneutrale, transparente und gefärbte Glaskeramiken, insbesondere farbneutrale, transparente und gefärbte LAS-Glaskeramiken bekannt. Beispielsweise beschreibt die japanische Schrift JP H5-051235 A2 eine farbarme Glaskeramik. Hier wird mit einem hohen Gehalt von Nd₂O₃ von bis zu 2 Gew.-% die Färbung, welche durch die Gehalte von 0,08 Gew.-% bis 0,8 Gew.-% Fe₂O₃ erhalten wird, entfärbt. Die sehr hohen Gehalte von Nd₂O₃ sind aufgrund des hohen Preises von Nd₂O₃ eher ungünstig. Darüber hinaus führt Nd zu einer schmalen Absorption im Sichtbaren, was sich nachteilig auf die Farbneutralität auswirkt.

Die deutsche Offenlegungsschrift DE 10 2017 118 451 A1 beschreibt ein Kochfeld mit einer Anzeigeeinrichtung.

Transparente, gefärbte LAS-Glaskeramiken mit farbneutralem Farbort beschreibt auch die deutsche Offenlegungsschrift DE 10 2018 110 908 A1. Hier wird die Farbneutralität der LAS-Glaskeramik durch die Färbung mit MoOs erzielt, wobei der Gehalt von Nd₂O₃ auf weniger als 0,2 Gew.-% begrenzt. Die färbende Komponente MoOs kann beispielsweise mit Gehalten zwischen 0,003 Gew.-% bis 0,5 Gew.-% enthalten sein, wobei mehr MoOs vorhanden sein muss, je größer die Gehalte färbender Komponenten wie Fe₂O₃ und/oder V₂O₅ sind. Besonders bevorzugt ist keinerlei Nd₂O₃ enthalten. Auf diese Weise ist es auch möglich, dass der Transmissionsverlauf im Sichtbaren sehr flach verläuft. Ein solcher flacher Kurvenverlauf der Transmission im Sichtbaren bedeutet, dass eine farblich nur gering verfälschte oder sogar gänzlich unverfälschte Anzeige mit weißen LED möglich ist.

Es wurde davon ausgegangen, dass eine solche geringe Farbverfälschung nicht mit Gehalten von mehr als 0,2 Gew.-% Nd₂O₃ realisiert werden kann, denn die Gegenfärbung mit Neodym beruht auf schmalen Absorptionsbanden bei 526, 584 und 748 nm.

Es hat sich außerdem gezeigt, dass die mit MoOs gefärbten Glaskeramiken mit neutralem Farbort eine relativ geringe IR-Transmission aufweisen. Dies ist insbesondere dann nachteilig, wenn die Glaskeramiken beispielsweise als Abdeckplatte für Kochanwendungen oder als Sichtscheibe in einem Ofen verwendet werden.

Eine weitere Schwierigkeit bei der Herstellung von LAS-Glaskeramiken, welche mit MoOs volumengefärbt werden, besteht darin, dass während des Schmelzens und der Keramisierung eine genaue Kontrolle der Verfahrensbedingungen notwendig ist. So ist es wichtig, bei der Schmelze eines Ausgangsglases (Vorläufer- oder Grünglases) für eine solche LAS-Glaskeramik den Redox-Zustand gezielt einzustellen, da es ansonsten zu einer unkontrollierten Entglasung kommen kann. Der Redox-Zustand, welcher in der Schmelze eingestellt wird, hat auch einen starken Einfluss auf die nachfolgende Keramisierung, denn die Färbung mit MoOs beruht letztlich auf einem Redoxvorgang. Hier gilt es, die beiden Vorgänge genau aufeinander abzustimmen, was letztlich zu einem erheblichen fertigungstechnischen Aufwand führt und daher letztlich nachteilig ist, da es zu erheblichen Schwankungen der resultierenden Transmission kommen kann.

Es besteht daher ein Bedarf an LAS-Glaskeramiken, welche einen neutralen Farbort aufweisen, gut herstellbar sind und vorzugsweise über eine hohe IR-Transmission verfügen, wobei der Farbort vorzugsweise gezielt einstellbar ist.

### Aufgabe der Erfindung

Die Aufgabe der Erfindung besteht in der Bereitstellung von Glaskeramiken, insbesondere LAS-Glaskeramiken, welche die vorstehend beschriebenen Schwächen des Standes der Technik zumindest teilweise vermindern oder überwinden. Weitere Aspekte der Erfindung betreffen ein Verfahren zur Herstellung solcher Glaskeramiken sowie deren Verwendung.

### Zusammenfassung der Erfindung

Die Aufgabe der Erfindung wird gelöst durch den Gegenstand der unabhängigen Ansprüche. Bevorzugte oder speziellere Ausführungsformen finden sich in den abhängigen Ansprüchen.

Die Anmeldung betrifft eine Glaskeramik mit einem Lichttransmissionsgrad von wenigstens 0,1 % und höchstens 80 % bei 4 mm Dicke, wobei Licht der Normlichtart D65 nach Durchtritt durch die Glaskeramik bei 4 mm Dicke einen Farbort im Weißlichtbereich W1 aufweist, der im Chromatizitätsdiagramm CIExyY-2° durch folgende Koordinaten bestimmt ist:

| Weißlichtbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

wobei die Glaskeramik eine Lithium-Aluminium-Silikat-Glaskeramik ist,
wobei die Glaskeramik transparent ist,
wobei die Glaskeramik volumengefärbt ist, und
wobei die Glaskeramik zwischen mindestens 0,003 Gew.-% und höchstens 0,4 Gew.-% MoOs umfasst und mehr als 0,2 Gew.-% Nd₂O₃ und vorzugsweise weniger als 0,8 Gew.-% Nd₂O₃.

Vorzugsweise beträgt das molare Verhältnis von Nd₂O₃/MoO₃ weniger als 15, vorzugsweise weniger als 10. Es hat sich nämlich gezeigt, dass auf diese Weise bei vergleichbarer Transmission im Sichtbaren eine Verringerung des MoOs-Gehalts vorgenommen werden kann. Auf diese Weise sind die Schmelzen eines Ausgangsglases für eine solche Glaskeramik leichter schmelzbar, insbesondere weniger anfällig gegenüber Entglasung. Weiter bevorzugt ist das Verhältnis höher als 0,5 und besonders bevorzugt höher als 1.

Eine solche Ausgestaltung einer Glaskeramik weist eine Reihe von Vorteilen auf.

Durch die Ausgestaltung der Glaskeramik mit einem Lichttransmissionsgrad von wenigstens 0,1 % und höchstens 80 % bei 4 mm Dicke, wobei Licht der Normlichtart D65 nach Durchtritt durch die Glaskeramik bei 4 mm Dicke einen Farbort im Weißlichtbereich W1 aufweist, ist diese zum einen hinreichend durchlässig für sichtbares Licht, sodass beispielsweise Anzeigeelemente, welche hinter einer solchen Glaskeramik angeordnet sind, durch die Glaskeramik hindurch wahrgenommen werden können. Liegt die Glaskeramik beispielsweise als Platte von 4 mm Dicke vor, beispielsweise als Abdeckplatte für ein Kochgerät, können Zustände des Kochgeräts also durch Anzeigeelemente angezeigt, beispielsweise in Form von farbigen Anzeigen, und von einem Benutzer durch die Glaskeramikplatte hindurch wahrgenommen werden. Dies dient also der Benutzersicherheit eines solchen Geräts.

Der Weißbereich W1 ergibt sich dabei als ein Bereich entlang der Schwarzkörperkurve im CIExyY-Farbraum, der von ca. 2750 K bis ca. 1000000 K Farbtemperatur reicht und an der oberen Grenze um einen Wert von ca. y = 0,04 gegenüber der Schwarzkörperkurve nach oben und an der unteren Grenze um ca. y = 0,07 nach unten verschoben ist. Hieraus ergibt sich der folgende Effekt: Licht der Normlichtart D65 hat per Definition eine Farbtemperatur von ca. 6500 K und bei direkter Beobachtung durch einen Beobachter unter einem Winkel von 2° einen Farbort von x = 0,31 und y = 0,33. Bei Durchtritt von Licht durch eine 4 mm dicke Glaskeramik nach der vorliegenden Offenbarung wird der Farbort des Lichts im Wesentlichen entlang der Schwarzkörperkurve verschoben, sowohl zu höheren als auch zu niedrigeren Werten hin, ohne dass ein unerwünschter Farbstich erzeugt wird. Weißes Licht wird also nach Durchtritt durch die Glaskeramik immer noch als weißes Licht wahrgenommen. Die Angaben beziehen sich hierbei auf Proben der Glaskeramik von 4 mm Dicke, wobei die Proben für die Messungen zur Vermeidung von Störeffekten poliert sind.

Die Glaskeramik ist als Lithium-Aluminium-Silikat-Glaskeramik ausgestaltet. Dies bedeutet, dass es sich um eine Glaskeramik handelt, welche als Kristallphasen Hochquarzmischkristall und/oder Keatit-Mischkristall umfasst. Solche Materialien weisen einen sehr geringen thermischen Ausdehnungskoeffizienten auf, sind thermisch beständig und mechanisch fest. Auch sind diese Glaskeramiken thermoschockbeständig. Sie eignen sich damit beispielsweise für Anwendungen, die betrieblich hohen thermischen Spannungen ausgesetzt sind. Insbesondere sind solche Glaskeramiken geeignet für die Verwendung als Kaminsichtscheibe und/oder als Backofensichtscheibe und/oder als Kochplatte.

Vorteilhaft ist es auch, wenn die Glaskeramik transparent ausgestaltet ist. Wie vorstehend ausgeführt, bedeutet dies, dass die Glaskeramik nur eine geringe Streuung aufweist. Anzeigeelemente, welche unterhalb einer Platte aus einer solchen Glaskeramik angeordnet sind, sind daher deutlich zu sehen und auch hochauflösende Displays können verwendet werden. Auch dies erhöht die Bedienersicherheit beispielsweise eines Kochgeräts, welches eine Abdeckplatte aus einer solchen Glaskeramik umfasst.

Durch eine Volumenfärbung der Glaskeramik wird erreicht, dass der Bediener nicht geblendet wird beispielsweise durch unterhalb der Glaskeramikplatte angeordnete Heizelemente, wie Strahlungsheizkörpern, eines solchen Kochgeräts.

Die Glaskeramik umfasst zwischen mindestens 0,003 Gew.-% und höchstens 0,4 Gew.-% MoOs und mehr als 0,2 Gew.-% Nd₂O₃ und vorzugsweise weniger als 0,8 Gew.-% Nd₂O₃.

Durch solche Gehalte an MoOs und Nd₂O₃ kann eine Glaskeramik erhalten werden, welche farbneutral ist und vorzugsweise gleichzeitig eine erhöhte Transmission im IR-Bereich aufweist. Durch die Absorptionsbanden, die durch den Gehalt von Nd₂O₃ im Sichtbaren erzeugt werden, ist zudem eine relativ flexible Feinjustierung des Farborts und/oder auch der IR-Transmission der Glaskeramik möglich. Es hat sich nämlich gezeigt, dass der Einsatz von Nd₂O₃ es erlaubt, bei gleicher Helligkeit der Glaskeramik den Gehalt von MoOs zu reduzieren. Da MoOs im nahen IR, also insbesondere auch bei 950 nm Wellenlänge, absorbiert, kann also die IR-Transmission in diesem Bereich erhöht werden Es handelt sich hierbei um einen Wellenlängenbereich, welcher beispielsweise für Sensoren zur Temperaturmessung verwendet wird.

Ein weiterer Vorteil der Verwendung von Nd₂O₃ zur gezielten Einfärbung und Einstellung des Farborts liegt darin, dass die Glaskeramik insgesamt weniger anfällig ist gegenüber Gehalten an färbenden und daher störenden Verunreinigungen. Unter solchen färbenden Verunreinigungen werden hier solche verstanden, welche der Glaskeramik einen vom neutralen Farbort abweichenden Farbeindruck verleihen, beispielsweise einen gelben Farbstich. Es ist mit Nd₂O₃ wegen dessen schmalen Absorptionsbanden möglich, solche Farbstiche gezielt zu entfärben. Dadurch können beispielsweise auch Rohstoffe eines geringeren Reinheitsgrades verwendet werden.

Vorzugsweise ist der Nd₂O₃-Gehalt begrenzt. Dies ist sinnvoll, weil Neodym ein teurer Rohstoff ist. Bei Gehalt von weniger als 0,2 Gew.-% Nd₂O₃ ist keine ausreichende Farbneutralität einstellbar. Ein Mindestgehalt von MoOs ist sinnvoll, um eine möglichst gute Neutralisierung des Farborts der Glaskeramik zu erzielen. Jedoch ist der Gehalt von MoOs begrenzt, da ein zu hoher Gehalt von MoOs als Keimbildner wirken und damit zu einer Entglasung führen kann. Der Gehalt von MoOs in den Glaskeramiken beträgt daher nicht mehr als 0,4 Gew.-%.

Es hat sich überraschenderweise gezeigt, dass durch die Zugabe von Nd₂O₃ in Gehalten von mehr als 0,2 Gew.-% trotz der durch Nd₂O₃ resultierenden schmalen Absorptionsbanden noch immer ein neutraler Farbort einstellbar ist. Dabei bietet eine Zusammensetzung, in welcher Nd₂O₃ und MoOs enthalten sind, den Vorteil, dass während der Herstellung von Vorläuferglas und Glaskeramik, also während des Schmelzvorgangs und/oder der Keramisierung, die Verfahrensbedingungen weniger anfällig gegenüber Schwankungen in der Prozessführung sind, wie beispielsweise hinsichtlich der Einstellung des genauen Redoxverhältnisses. Dies erlaubt auch im späteren Keramisierungsprozess eine günstigere, beispielsweise schnellere, Prozessführung. Weiterhin wird es durch die Zugabe von Nd₂O₃ ermöglicht, gleichzeitig eine verbesserte Transmission im IR-Bereich zu erhalten.

Gemäß einer Ausführungsform der Glaskeramik ist diese dadurch gekennzeichnet, dass Licht der Normlichtart D65 nach Durchtritt durch die Glaskeramik bei 4 mm Dicke einen Farbort im Weißbereich W2 aufweist, der im Chromatizitätsdiagramm CIExyY-2° durch folgende Koordinaten bestimmt ist:

| Weißlichtbereich W2 | |
|---|---|
| x | y |
| 0,27 | 0,24 |
| 0,25 | 0,27 |
| 0,32 | 0,36 |
| 0,41 | 0,42 |
| 0,42 | 0,36 |
| 0,35 | 0,31 |

Dieser Weißbereich W2 ergibt sich dabei als ein Bereich entlang der Schwarzkörperkurve im CIExyY-Farbraum, der von ca. 3500 K Farbtemperatur bis ca. 20000 K Farbtemperatur reicht und an der oberen Grenze um einen Wert von ca. y = 0,025 gegenüber der Schwarzkörperkurve nach oben und an der unteren Grenze um ca. y = 0,04 nach unten verschoben ist. Dieser Bereich erstreckt sich im Vergleich zu W1 also entlang eines kürzeren Abschnitts der Schwarzkörperkurve, der genau dem Bereich von Farborten des natürlichen Sonnenlichts entspricht, und weist zusätzlich eine geringere Abweichung in den x- und y-koordinaten von der Schwarzkörperkurve auf. Weißes Licht, das durch eine solche Glaskeramik hindurchtritt, wird deswegen als besonders weiß und natürlich wahrgenommen.

Gemäß einer weiteren Ausführungsform der Glaskeramik ist diese dadurch gekennzeichnet, dass Licht der Normlichtart D65 nach Durchtritt durch die Glaskeramik bei 4 mm dicke einen Farbort im Weißbereich W3 aufweist, der sich entlang der Schwarzkörperkurve im CIExyY-Farbraum von ca. 5000 K bis ca. 20000 K Farbtemperatur erstreckt und an der oberen Grenze um einen Wert von ca. y = 0,025 gegenüber der Schwarzkörperkurve nach oben und an der unteren Grenze um ca. y = 0,04 nach unten verschoben ist. Der Weißbereich W3 entspricht also im Wesentlichen dem Bereich W2, beginnt aber erst bei einer Farbtemperatur von 5000 K. Dieser Farbbereich entspricht Tageslichtweiß und wird vom menschlichen Beobachter entsprechend als besonders reines Weiß, insbesondere als Kaltweiß, wahrgenommen. Dieser Farbort W3 ist durch folgende Koordinaten im Chromatizitätsdiagramm CIExyY-2° bestimmt:

| Weißlichtbereich W3 | |
|---|---|
| x | y |
| 0,250 | 0,270 |
| 0,290 | 0,320 |
| 0,340 | 0,370 |
| 0,360 | 0,320 |
| 0,310 | 0,280 |
| 0,270 | 0,240 |

Bevorzugt umfasst die Glaskeramik zwischen mindestens 0,05 Gew.-% SnO₂ und höchstens 0,8 Gew.-% SnO₂ und/oder die Glaskeramik umfasst bevorzugt zwischen 0,06 Gew.-% Fe₂O₃ und besonders bevorzugt höchstens 0,15 Gew.-% Fe₂O₃.

Vorteilhaft ist der Gehalt an Oxiden störender, sehr stark färbender Metalle in den Glaskeramiken gemäß Ausführungsformen in Summe auf bis zu 0,2 Gew.-% begrenzt. Vorzugsweise ist der Gehalt solcher störender sehr stark färbender Metalloxide, wie beispielsweise von CoO und/oder Cr₂O₃, auf in Summe maximal 0,15 Gew.-% begrenzt.

Im Rahmen der vorliegenden Erfindung werden unter störenden, stark färbenden Metalloxiden solche verstanden, welche bekanntermaßen eine Färbung in einer Glaskeramik hervorrufen, aber lediglich in Form von Verunreinigungen vorliegen. Es handelt sich hierbei insbesondere um Cr₂O₃, MnO₂, CoO und NiO.

Fe₂O₃ färbt zwar ebenfalls, wird aber im Rahmen der vorliegenden Erfindung nicht als sehr stark färbendes Metalloxid bezeichnet. Fe₂O₃ ist eine üblicherweise in Gläsern und Glaskeramiken vorkommende Verunreinigung, welche nicht zu einer intensiven Färbung führt, sondern in der Regel lediglich einen leichten Farbstich verleiht. Ein höherer Eisengehalt ist daher zulässig.

Der bevorzugte Gehalt von Fe₂O₃ von mindestens 0,06 Gew.-% und höchstens 0,15 Gew.-% unterstützt die Ausbildung einer farbneutralen und dabei kostengünstigen Glaskeramik in vorteilhafter Weise. Da Fe₂O₃ wie ausgeführt zu einer Färbung der Glaskeramik führt, also sich störend auf die Neutralität des Farborts auswirkt, sollte der Gehalt an Fe₂O₃ nicht zu groß sein. Jedoch hat sich gezeigt, dass die vorliegende Glaskeramik trotz eines höheren Fe₂O₃-Gehalts noch farbneutral bzw. mit unbuntem Farbort darstellbar ist. Dies ist günstig, weil auf diese Weise Rohstoffe eingesetzt werden können, welche einen höheren Gehalt an Verunreinigungen aufweisen. Die Glaskeramik nach der vorliegenden Anmeldung ist also hinsichtlich Verunreinigungen toleranter. Jedoch sollte auch hier der Eisengehalt möglichst nicht zu groß sein und ist daher vorzugsweise auf höchstens 0,15 Gew.-% begrenzt.

Im Rahmen der vorliegenden Offenbarung wird der Gehalt einer Komponente als Oxid angegeben, wobei hier die Oxidkomponente angegeben wird, welche in der Analyse erhalten wird. Dies bedeutet, dass auch die Gehalte von Komponenten, wie beispielsweise Eisen, welche in unterschiedlichen Oxidationsstufen vorliegen können, hier einheitlich und pauschal in der Oxidform angegeben werden, welche in der chemischen Analyse der Zusammensetzung bestimmt wird.

Es ist gemäß einer Ausführungsform der Glaskeramik möglich, diese Glaskeramik mit Zinn zu läutern. Dies ist vorteilhaft, da auf diese Weise der Einsatz von bedenklichen Stoffen, insbesondere von Arsen und/oder Antimon, vermieden werden kann. Zinn ist unter Umweltgesichtspunkten eher unbedenklich, aber dennoch ein sehr effizientes Läutermittel. In den solcherart geläuterten Glaskeramiken ist Zinn in Form von Zinnoxid als SnO und/oder SnO₂ nachweisbar. Umgerechnet auf einheitlich SnO₂ als Oxidform liegen die Gehalte von SnO₂ daher gemäß einer Ausführungsform zwischen mindestens 0,05 Gew.-% SnO₂ und höchstens 0,8 Gew.-% SnO₂. Bei geringeren Gehalten der Glaskeramik an SnO₂ ist dem Glasgemenge eine zu geringe Menge an Zinn bzw. Zinnoxid zugesetzt worden, sodass keine ausreichende Läuterung möglich ist und das Grünglas als Vorläufermaterial Blasen aufweist, welche auch in der späteren Glaskeramik sichtbar sind. Diese Blasen sind nicht nur visuell störend, sondern können auch Ausgangspunkte für ein Versagen des Materials darstellen. Der Gehalt an SnO₂ sollte aber auch nicht zu hoch gewählt werden, da SnO₂ auch als Keimbildner wirken kann. Ein zu hoher Gehalt an SnO₂ könnte dazu führen, dass eine gesteuerte Kristallisation nicht erfolgt, sondern vielmehr es zu einer unkontrollierten Entglasung kommt. Daher ist der Gehalt an SnO₂ vorzugsweise begrenzt.

Gemäß einer Ausführungsform der Glaskeramik beträgt der V₂O₅-Gehalt der Glaskeramik weniger als 0,15 Gew.-%, bevorzugt weniger als 0,01 Gew.-%. Vanadiumoxid V₂O₅ ist selbst eine bekanntermaßen färbende Verbindung und führt in Glaskeramiken häufig zu einem orangeroten Farbton, ist also nicht günstig, wenn eine möglichst große Farbneutralität gewünscht ist.

Gemäß einer weiteren Ausführungsform der Glaskeramik beträgt die in Transmission mit Normlicht D65, 2° gemessene Buntheit c* im CIELAB-Farbsystem bei einer Dicke von 4 mm höchstens 21, bevorzugt höchstens 15 und besonders bevorzugt höchstens 7. Bevorzugt weisen die Farbkoordinaten a*, b* folgende Werte auf: a*, b* = 0 ± 17, weiter bevorzugt a*, b* = 0 ± 12, noch mehr bevorzugt a*, b* = 0 ± 8, und besonders bevorzugt a*, b* = 0 ± 6. Mit anderen Worten weichen die Farbkoordinaten a*, b* möglichst wenig von der Unbuntachse ab. Auch diese Werte beziehen sich auf polierte Proben von 4 mm Dicke.

Mit Änderungen in der Dicke verschieben sich die Farbkoordinaten einer Glaskeramik umso stärker, je größer die auf 4 mm bezogene Buntheit c* ist. Bevorzugt ist eine Glaskeramik, bei der für den gesamten Dickenbereich von 2,5 mm bis 6 mm die bevorzugten Grenzen für die Buntheit c* eingehalten werden.

Bei Darstellung der geringen Farbe im CIExyY-Farbraum liegen die Farbortkoordinaten für eine Dicke von 4 mm in der Nähe des Weiß- oder Unbuntpunktes. Bei der Transmissionsmessung mit Normlicht D65, 2°, liegt der Weißpunkt bei x = 0,3127 und y = 0,3920. Die bevorzugten Grenzen für den Weißbereich liegen hier bei Δx = ± 0,13 und Δy = ±0,10.

Die transparenten, gefärbten, insbesondere volumengefärbten, Glaskeramiken haben eine geringe, visuell unauffällige Streuung bei der Durchsicht auf Gegenstände oder bei der Betrachtung von unterhalb der Glaskeramik angeordneten Anzeigeelementen, wie beispielsweise von Displays und/oder Leuchtelementen, wie Leuchtdioden. Gemäß einer Ausführungsform beträgt daher der Haze-Wert weniger als 10%, bevorzugt weniger als 6%, besonders bevorzugt weniger als 4 % und ganz besonders bevorzugt weniger als 2,5 %.

Gemäß einer weiteren Ausführungsform der Glaskeramik weist die Glaskeramik einen flachen Verlauf der Transmissionskurve auf, bei dem das Verhältnis des höchstens Transmissionswerts zum niedrigsten Transmissionswert im Wellenlängenbereich von 470 nm bis 630 nm höchstens 2,5 beträgt, bevorzugt höchstens 2 und besonders bevorzugt höchstens 1,8.

In diesem Wellenlängenbereich von 470 nm bis 630 nm ist die Empfindlichkeit des menschlichen Auges besonders groß. Der flache Transmissionsverlauf stellt damit die farblich für das menschliche Auge nur gering oder ggf. sogar unverfälschte Anzeige mit weißen LED, die meist polychromatisch sind, sicher. Die Durchsicht durch Glaskeramikartikel ist für die verschiedenen Verwendungen farblich wenig verändert und entspricht also in etwa einem optischen Graufilter. Der flache Transmissionsverlauf hat darüber hinaus den Vorteil, dass die Farbkoordinaten der Glaskeramik wenig von der Dicke des Artikels abhängen.

Der Verlauf der Transmissionskurve im Infraroten und UV erfüllt bei den hier betrachteten Glaskeramiken die Anforderungen, die sich aus den Anwendungen solcher Glaskeramiken, beispielsweise der Anwendung einer LAS-Glaskeramik als Kochplatte oder als Kaminsichtscheibe, basierend auf bekannten, insbesondere auf den bekannte, mittels Vanadiumoxid gefärbten, LAS-Glaskeramiken ergeben.

Im gesamten Wellenlängenbereich von 950 nm bis 2500 nm wird bevorzugt ein spektraler Transmissionsgrad von 25% nicht unterschritten. Bevorzugt liegt der spektrale Transmissionsgrad in diesem Bereich bei mindestens 30 % und bevorzugt bei mindestens 40 %. Diese Werte beziehen sich jeweils auf Proben von 4 mm Dicke. Die genannten Mindesttransmissionswerte sollten nicht unterschritten werden, da dieser Wellenlängenbereich bei Kochgeräten, welche eine Abdeckplatte aus Glaskeramik aufweisen, für die Erfassung der Temperatur des Topfbodens mittels Infrarotsensoren genutzt wird oder genutzt werden kann.

Gemäß einer weiteren Ausführungsform der Glaskeramik weist diese einen spektralen Transmissionsgrad, bezogen auf eine Dicke der Glaskeramik von 4 mm, zwischen 45% und 85% bei einer Wellenlänge von 1600 nm auf. Bevorzugt beträgt der spektrale Transmissionsgrad bei 1600 nm zwischen mindestens 50 % und höchstens 80 %. Bei solchen Werten werden die Anforderungen, welche beispielsweise an Abdeckplatten für Kochflächen hinsichtlich einer hohen Ankochgeschwindigkeit einerseits und dem Schutz vor zu hoher Erwärmung der Umgebung des Kochgeräts andererseits erfüllt.

Bei Glaskeramik-Kaminsichtscheiben ist die angegebene Durchlässigkeit von Infrarot-Strahlung ebenfalls hinsichtlich eines ausreichenden Wärmedurchtritts durch die Scheibe hindurch gewünscht.

Im fernen Infrarot ist ein Transmissionsfenster zwischen etwa 3 µm und 4,3 µm gewünscht, da auch hier bei Abdeckplatten für Kochflächen IR-Sensoren eingesetzt werden. Bei 3700 nm ist ein spektraler Transmissionsgrad von mindestens 30%, bevorzugt von mindestens 40 % vorteilhaft.

Gemäß einer weiteren Ausführungsform der Glaskeramik ist der spektrale Transmissionsgrad im UV-Bereich bei Wellenlängen von weniger als 300 nm kleiner als 0,1 %.

Gemäß einer weiteren Ausführungsform der Glaskeramik beträgt der TiO₂-Gehalt mehr als 1,5 Gew.-% bis höchstens 5,5 Gew.-% und/oder ZrO₂-Gehalt zu höchstens kleiner als 2,5 Gew.-% von der Glaskeramik umfasst ist.

TiO₂ ist ein Keimbildner und unterstützt zudem die Färbung durch MoOs, sodass diese Komponente vorzugsweise zu mindestens 1,5 Gew.-% in den Glaskeramiken enthalten sein sollte. Bevorzugt beträgt der Gehalt an TiO₂ mindestens 2,5 Gew.-%, besonders bevorzugt mindestens 3,0 Gew.-% und ganz besonders bevorzugt von mindestens 3,5 Gew.-%. In den hier betrachteten Glaskeramiken ist TiO₂ wegen der Verstärkung der Färbung mit MoOs vorzugsweise der Hauptkeimbildner, und es gilt die Komponentenbeziehung (in Gew.-%) TiO₂/ZrO₂ größer als 1, bevorzugt größer als 2 und besonders bevorzugt größer als 3. Vorgesehen ist ein Gehalt von TiO₂ von höchstens 5,5 Gew.-%, da ansonsten unerwünschte Nebenphasen, wie beispielsweise Rutil, in den Glaskeramiken auftreten können.

Gemäß einer weiteren Ausführungsform der Glaskeramik enthält diese die folgenden Komponenten in Gew.-%:

| | |
|---|---|
| Li₂O | 2 bis 5,5 |
| Al₂O₃ | 16 bis 26 |
| SiO₂ | 58 bis 72 |

Solche Gehalte der Glaskeramik an den Komponenten Li₂O, SiO₂ und Al₂O₃ sind vorteilhaft für die Ausbildung der Kristallphasen Keatit-Mischkristall und/oder Hochquarz-Mischkristall.

Hinsichtlich des Li₂O-Gehalts hat sich gezeigt, dass ein Mindestgehalt von 2 Gew.-% vorteilhaft für die Ausbildung der gewünschten Kristallphasen mit niedriger thermischer Dehnung ist. Höhere Gehalte als 5,5 Gew.-% können jedoch zu spontaner Kristallisation des Glases, also einer ungewünschten Entglasung, führen, und sind daher ungünstig. Bevorzugt beträgt der Li₂O-Gehalt mindestens 2,8 Gew.-%. Dies ist vorteilhaft, weil auf diese Weise die Färbung der Glaskeramik durch MoOs verstärkt wird. Ein Gehalt von Li₂O zwischen 3,0 Gew.-% und 5 Gew.-% führt zu besonders guten Ergebnissen. Der Gehalt an Al₂O₃ sollte zwischen 16 Gew.-% bis 26 Gew.-% betragen. Höhere Gehalte können zur Ausbildung unerwünschter kristalliner Phasen und zur spontanen Entglasung unter Bildung von Mullit führen. Bevorzugt ist ein Bereich zwischen 18 Gew.-% und 25 Gew.-%.

Der SiO₂-Gehalt sollte nicht mehr als 72 Gew.-% betragen, da ansonsten die Viskosität des Glases zu hoch wird und damit solche Gehalte unter wirtschaftlichen Gesichtspunkten nicht sinnvoll sind. Bevorzugt ist der Gehalt von SiO₂ maximal 70 Gew.-%, besonders bevorzugt maximal 69 Gew.-%. Weiterhin sollte die Glaskeramik mindestens 58 Gew.-% SiO₂, vorzugsweise mindestens 60 Gew.-%, umfassen, damit eine Glaskeramik mit guter chemischer und thermischer Beständigkeit erhalten wird. Weiterhin verringern solche Mindestgehalte an SiO₂ bei kurzen Keramisierungszeiten das Auftreten von Streuung.

Gemäß einer nochmals weiteren Ausführungsform der Glaskeramik weist diese eine Zusammensetzung im folgenden Zusammensetzungsbereich, gegeben durch die folgenden Komponenten in Gew.-%, auf:

| | |
|---|---|
| Li₂O | 3 bis 5 |
| Σ(Na₂O+K₂O) | 0,1 bis weniger als 4 |
| MgO | 0 bis 3 |
| Σ(CaO+BaO+SrO) | 0 bis 5 |
| ZnO | 0 bis 4 |
| B₂O₃ | 0 bis 3 |
| Al₂O₃ | 18 bis 25 |
| SiO₂ | 60 bis 70 |
| TiO₂ | 1,5 bis 5,5 |
| ZrO₂ | 0 bis 2,5, vorzugsweise zwischen 0,3 und vorzugsweise weniger als 2,2 |
| SnO₂ | 0,1 bis weniger als 0,7 |
| Σ(TiO₂+ZrO₂+SnO₂) | 3 bis 6,5 |
| P₂O₅ | 0 bis 5 |
| MoOs | 0,01 bis 0,3 |
| Fe₂O₃ | 0,06 bis 0,15 |
| Nd₂O₃ | mehr als 0,2 bis weniger als 0,8 |
| V₂O₅ | 0 bis 0,02. |

Gemäß einer weiteren Ausführungsform der Glaskeramik weist diese eine Zusammensetzung im folgenden Zusammensetzungsbereich, gegeben durch die folgenden Komponenten in Gew.-%, auf:

| | |
|---|---|
| Li₂O | 3 bis 5 |
| Σ(Na₂O+K₂O) | 0,2 bis weniger als 3 |
| MgO | 0 bis 1,5 |
| Σ(CaO+BaO+SrO) | 0,2 bis 4 |
| ZnO | 0 bis 3 |
| B₂O₃ | 0 bis 2 |
| Al₂O₃ | 18 bis 24 |
| SiO₂ | 60 bis 69 |
| TiO₂ | 1,5 bis 5,5 |
| ZrO₂ | 0 bis 2,5, vorzugsweise zwischen 0,3 und vorzugsweise weniger als 2,2 |
| SnO₂ | 0,1 bis weniger als 0,7 |
| Σ(TiO₂+ZrO₂+SnO₂) | 3 bis 6,5 |
| P₂O₅ | 0 bis 3 |
| MoO₃ | 0,01 bis 0,25 |
| Fe₂O₃ | 0,06 bis 0,15 |
| Nd₂O₃ | mehr als 0,2 bis weniger als 0,8 |
| V₂O₅ | 0 bis weniger als 0,01. |

Vorzugsweise umfasst die Glaskeramik bis auf unvermeidbare Spuren kein Arsenoxid und/oder Antimonoxid. Als unvermeidbare Spuren werden hierbei solche Gehalte bezeichnet, welche sich aus letztlich unvermeidlichen Verunreinigungen der verwendeten Rohstoffe ergeben. Diese liegen üblicherweise je Komponente bei höchstens 500 ppm. Gemäß einer Ausführungsform umfasst die Glaskeramik daher höchstens 500 ppm As₂O₃ und/oder höchstens 500 ppm Sb₂O₃.

Bevorzugt umfasst die Glaskeramik als Hauptkristallphase Hochquarz-Mischkristalle. Die Kristallphasen in einer Glaskeramik können insbesondere durch die Auswertung von Röntgenbeugungsdiagrammen, beispielsweise mittels einer Rietveldanalyse, ermittelt werden. Als Hauptkristallphase wird dabei die Kristallphase bezeichnet, welche in der Glaskeramik mit dem größten Volumenanteil vorhanden ist.

Eine solche Ausgestaltung ist vorteilhaft, da auf diese Weise besonders einfach Glaskeramiken erhalten werden, die wenig streuen. Für die Minimierung der Streuung ist weiterhin auch vorteilhaft, wenn die Kristallitgrößen möglichst gering sind, insbesondere ist eine mittlere Kristallitgröße von weniger als 70 nm, bevorzugt von weniger als 60 nm, günstig für die Ausbildung einer möglichst geringen Streuung.

Der Kristallphasenanteil der Hochquarz-Mischkristalle der Glaskeramik beträgt vorzugsweise wenigstens 50 Vol.-% und weiterhin vorzugsweise höchstens 80 Vol.-%. Dieser Bereich ist vorteilhaft zur Ausbildung der gewünschten mechanischen und thermischen Eigenschaften der Glaskeramik. Besonders ist ein Anteil von 55 Vol.-% bis 75 Vol.-% bevorzugt.

Die thermische Ausdehnung der Glaskeramik wird üblicherweise im Temperaturbereich zwischen Raumtemperatur und ca. 700°C bestimmt. In diesem Bereich beträgt der thermische Ausdehnungskoeffizient der Glaskeramiken gemäß Ausführungsformen 0 ± 1 * 10⁻⁶/K. Es handelt sich hierbei um den mittleren linearen thermischen Aus Eine solche Glaskeramik wird auch als nullausdehnend beschrieben und ein solcher thermische Ausdehnungskoeffizient als "Nullausdehnung" bezeichnet. Die mittlere thermische Ausdehnung weicht vorzugsweise im Bereich von ca. 20°C bis ca. 700°C um höchstens 0,5 * 10⁻⁶/K von der Nullausdehnung ab.

In einer anderen Ausführungsform enthält die transparente gefärbte Glaskeramik Keatit-Mischkristalle als Hauptkristallphase. Die mittlere Kristallitgröße ist bevorzugt kleiner als 150 nm, sodass die Streuung die zulässigen Haze-Werte nicht überschreitet. Der Kristallphasenanteil beträgt bevorzugt mehr als 55 Vol.-%.

Die Glaskeramiken können beide Kristallarten enthalten. Durch die unterschiedlichen Eigenschaftskombinationen der Glaskeramik-Ausführungen wird abhängigen von den enthaltenen Kristallphasen und deren Mengenverhältnis zueinander eine Vielzahl von Anwendungen technisch und wirtschaftlich vorteilhaft adressiert.

Die Glaskeramik liegt vorzugsweise in Form eines scheibenförmigen Formkörpers vor. Als scheibenförmig wird ein Formkörper bezeichnet, wenn seine laterale Abmessung in einer Raumrichtung eines kartesischen Koordinatensystems mindestens eine Größenordnung geringer ist als in den anderen beiden zu dieser ersten Raumrichtung senkrechten Raumrichtung. Diese erste laterale Abmessung wird auch als Dicke bezeichnet, die beiden anderen lateralen Abmessungen auch als Länge und Breite. Vorzugsweise liegt also die Glaskeramik in Form einer Scheibe oder Platte vor, wobei diese Scheibe oder Platte vorzugsweise eine Dicke zwischen 2 mm und 20 mm aufweist. Bei geringeren Dicken wird nur eine geringe Festigkeit erhalten, welche für manche Anwendungen nicht ausreicht. Zu hohe Dicken bedingen höhere Materialkosten. Vorzugsweise beträgt die Dicke höchstens 6 mm.

Gemäß einer weiteren Ausführungsform der Erfindung kann der scheibenförmige Formkörper nicht nur eben, sondern auch dreidimensional verformt vorliegen, beispielsweise als gewölbte, gekantete oder gewinkelte Scheibe. Diese Platten oder Scheiben können rechtwinklig oder in anderen Formen vorliegen, sowie neben ebenen Bereichen dreidimensional verformte Bereiche aufweisen, beispielsweise Woks oder eingewalzte Stege. Insbesondere können die Platten oder Scheiben gemäß Ausführungsformen so ausgestaltet sein, dass beide Seiten glatt sind oder dass eine Seite glatt, eine andere Seite jedoch genoppt ausgebildet ist.

Ein weiterer Aspekt der vorliegenden Schrift betrifft ein Verfahren zur Herstellung eines Formkörpers aus einer Glaskeramik, insbesondere einer Glaskeramik gemäß Ausführungsformen, umfassend die Schritte:
a) Bereitstellen eines Gemengesatzes aus technischen Rohstoffen enthaltend zwischen 20 Gew.- % und 80 Gew.-% Scherben,
b) Schmelzen des Gemengesatzes und Läutern bei Temperaturen, die mindestens 1600°C erreichen,
c) Einstellen eines reduzierten Zustandes in der Glasschmelze, bei dem keine Kristalle im Glas gebildet werden,
d) Abkühlen der Glasschmelze und Formgeben mittels Walzen oder Floaten, wobei insbesondere das Walzen bei Temperaturen in der Nähe der Verarbeitungstemperatur V_{A}, beispielsweise in einem Temperaturbereich von ±200 K um V_{A}, vorzugsweise ±100 K um V_{A}, erfolgen kann, unter Erhalt eines Formkörpers aus kristallisierbarem Glas,
e) Kühlen in einem Entspannungsofen auf Raumtemperatur, wobei unerwünschte Spannungen im glasigen Formkörper entfernt werden,
f) Erhöhen der Temperatur des Formkörpers aus kristallisierbarem Glas auf den Temperaturbereich von etwa 680°C innerhalb von 3 Minuten bis 60 Minuten,
g) Erhöhen der Temperatur des Formkörpers aus kristallisierbarem Glas innerhalb des Temperaturbereichs der Keimbildung von 680°C bis 800°C über einen Zeitraum von etwa 10 Minuten bis 100 Minuten, sodass ein Formkörper aus Glas enthaltend und/oder umfassend Kristallisationskeime erhalten wird,
h) Erhöhen der Temperatur des Formkörpers aus Kristallisationskeime enthaltendem oder umfassendem Glas innerhalb von 5 Minuten bis 80 Minuten Dauer in den Temperaturbereich 850°C bis 980°C,
i) Halten des Temperaturbereichs bei der maximalen Temperatur von 850°C bis 980°C bis zu 60 Minuten, sodass ein Formkörper aus Glaskeramik erhalten wird, sowie
j) Abkühlen des Formkörpers aus Glaskeramik auf Raumtemperatur in weniger als 150 Minuten, wobei die Keramisierung eine Gesamtdauer von weniger als 300 Minuten aufweist.

Es handelt sich um Scherben, die im Wesentlichen der Zusammensetzung der Glaskeramik entsprechen und die in der Produktion z. B. aus Bodenabläufen der Schmelzwanne oder als Verschnittreste beim Zuschnitt der Scheibenformate aus dem produzierten Glasband oder allgemein aus Produktionsausschuss anfallen. Ebenso können Scherben aus einem Recycling-Kreislauf eingesetzt werden, sofern sie im Wesentlichen der Zusammensetzung der Glaskeramik entsprechen. Darunter, dass die Scherben im Wesentlichen der Zusammensetzung der Glaskeramik entsprechen, ist zu verstehen, dass die durchschnittliche Zusammensetzung der Gesamtheit der Scherben nur so weit von der gewünschten Zusammensetzung der Glaskeramik entfernt liegt, dass die Unterschiede über die Zugabe der übrigen technischen Rohstoffe ausgeglichen werden können. Diese durchschnittliche Zusammensetzung kann beispielsweise stichprobenartig bestimmt werden. Bestandteile, die nicht oder nur bis zu gewissen Grenzwerten in der Glaskeramik enthalten sein sollen, sollten entsprechend auch nicht in den Scherben in größeren Mengen enthalten sein.

Dem Fachmann ist dabei bekannt, in welchem Temperaturbereichen Formgebungsprozesse, beispielsweise Walzen oder Floaten, üblicherweise durchzuführen sind bzw. üblicherweise durchgeführt werden, sodass der Fachmann für die Formgebung übliche Temperaturbereiche einstellen wird. Beispielsweise kann zumindest ein Teil der Formgebungsprozesse, beispielsweise das Walzen, bei Temperaturen in der Nähe der Verarbeitungstemperatur V_{A}, beispielsweise in einem Temperaturbereich von ±200 K um V_{A}, vorzugsweise ±100 K um V_{A}, erfolgen.

Es hat sich gezeigt, dass gerade bei der Farbgebung durch Molybdän die Einstellung des Redox-Zustandes des Glases in der Schmelze von besonderer Bedeutung ist, um in der Schmelze ein kristallisierbares Glas zu erhalten und gleichzeitig unerwünschter, spontaner Kristallisation vorzubeugen. Hierzu nennt die Anmeldung DE 10 2018 110 908 A1 verschiedene Maßnahmen, nämlich beispielsweise
- das Schmelzen des Gemengesatzes bei Temperaturen, die mindestens 1600°C erreichen, sowie
- dass ein reduzierter Zustand in der Glasschmelze eingestellt wird, bei dem noch keine Kristalle im Glas gebildet werden.

Bei einer Schmelztemperatur von mindestens 1600°C liegen bereits ausreichende Mengen von polyvalenten Komponenten (wie beispielsweise Sn²⁺) in niedriger Wertigkeitsstufe vor. Damit kann Molybdän dann in den für die Erzeugung der Färbung notwendigen reduzierten Zustand überführt werden. Es sollte für hoch-MoOs-haltige Zusammensetzungen, also solche mit einem Gehalt von MoOs von mehr als 0,5 Gew.-%, jedoch ein zu reduzierender Zustand vermieden werden, da sonst größere Anteile von Molybdän in den niedrigen Wertigkeitszustand überführt werden. Diese niedrigere Wertigkeitsstufe von Molybdän führt allerdings zu einer Verstärkung der Entglasungsneigung. Der Redoxzustand der Glasschmelze wird also gezielt so eingestellt, dass einerseits eine effiziente Färbung mit Molybdän möglich ist, andererseits noch keine Entglasung auftritt. Der Sauerstoffpartialdruck kann dabei durch Messung des Sauerstoffpartialdrucks des Glases als Funktion der Temperatur bestimmt werden.

Die aufwendige Einstellung eines genau zu spezifizierenden reduzierenden Zustands in den Gläsern und Glaskeramiken nach DE 10 2018 110 908 A1 ist jedoch vorliegend nicht notwendig, da hier der Gehalt an MoOs begrenzt ist und zur gezielten Einstellung des Farborts Nd₂O₃ verwendet wird. Die Zusammensetzung nach der vorliegenden Erfindung erlaubt es den Gehalt des diesbezüglich kritischen MoO gegenüber der genannten Schrift auf Werte von höchstens 0,4 Gew.% zu begrenzen und bietet also zusätzliche Freiheitsgrade hinsichtlich der Herstellung des Ausgangsglases und der Kristallisation und ist daher unter den Gesichtspunkten einer erleichterten Herstellung besonders vorteilhaft.

Der Fachmann, welcher die Maßnahmen zur Einstellung eines reduzierenden Zustandes kennt, wird diese entsprechend anwenden, um für die Zusammensetzungen nach der vorliegenden Schrift entsprechende Verfahrensparameter auszuwählen.

Die vorliegende Schrift betrifft weiterhin auch die Verwendung eines Formkörpers, der eine Glaskeramik nach einer Ausführungsform umfasst, als Kochgeschirr, Kaminsichtscheibem Koch-, Grill- und/oder Bratfläche, in einer Brandschutzverglasung, als Backofensichtscheibe, insbesondere für Pyrolyseherde, als Abdeckung im Beleuchtungssektor, als Sicherheitsglas, optional in einem Laminatverbund, als Trägerplatte oder als Ofenauskleidung in thermischen Prozessen.

Insbesondere betrifft die vorliegende Schrift auch die Verwendung eines Formkörpers als dunkel gefärbte, insbesondere volumengefärbte, Kochfläche, wobei der Formkörper eine Platte mit einer Dicke von 2,5 mm bis 6 mm und einer Lichttransmission zwischen 1,5 % bis weniger als 5 % ist, ohne Verwendung von aufgebrachten Farbfiltern und/oder-schichten zur Korrektur des Farbortes des durchgestrahlten Lichts.

Weiterhin betrifft die vorliegende Schrift auch die Verwendung eines Formkörpers nach Ausführungsformen als gefärbte, insbesondere volumengefärbte, Kochfläche, wobei der Formkörper eine Platte mit einer Dicke von 2,5 mm bis 6 mm und einer Lichttransmission zwischen 5 % bis 80 % ist, wobei die Platte eine als blickdichte Ober- und/oder Unterseitenbeschichtung ausgeführte Maskierung aufweist, und ohne Verwendung von aufgebrachten Farbfiltern und/oder-schichten zur Korrektur des durchgestrahlten Lichts.

Unter einem Formkörper wird im Rahmen der vorliegenden Schrift ein Körper vorbestimmter, d.h. genaue eingestellter, Geometrie verstanden. Insbesondere kann diese vorbestimmte Geometrie eine plattenförmige Geometrie sein, d.h. die räumliche Ausdehnung des Körpers ist in einer Raumrichtung eines kartesischen Koordinatensystems mindestens eine Größenordnung geringer als in den beiden anderen, zu dieser ersten Raumrichtung senkrechten Raumrichtung. Mit anderen Worten kann insbesondere die Dicke des als Platte ausgebildeten Formkörpers eine Größenordnung geringer sein als dessen Länge und Breite.

Unter einer Maskierung wird eine Beschichtung verstanden, welche den Durchtritt von Licht blockiert. Insbesondere kann in den Bereichen mit einer Maskierung die Transmission für sichtbares Licht weniger als 1 %, insbesondere weniger als 0,1 % betragen, vorzugsweise bestimmt für eine Dicke einer Platte von 4 mm.

Unter einer Keramisierung wird die Überführung eines Vorläufer- oder Grünglases in eine Glaskeramik verstanden. Die Keramisierung ist eine thermische Behandlung und umfasst die Schritte der Keimbildung und des Kristallwachstums. Die Begriffe der Keramisierung, der Keimbildung und des Kristallwachstums sind dem Fachmann auf dem Gebiet der Glaskeramik bekannt.

Ein Grünglas oder Vorläuferglas kann auch als kristallisierbares Glas bezeichnet werden. Es handelt sich dabei um ein Glas, welches einer steuerbaren, insbesondere gesteuerten Kristallisation zugänglich ist. Eine solche steuerbare, insbesondere gesteuerte, Kristallisation wird auch als Keramisierung bezeichnet.

Die Verarbeitungstemperatur V_{A} eines Glases ist die Temperatur, bei welcher das Glas eine Viskosität von 10⁴ dPas aufweist.

Der spektrale Transmissionsgrad bezeichnet die Transmission eines Stoffes für elektromagnetische Strahlung bei einer bestimmten Wellenlänge.

Ein technischer Rohstoff bezeichnet hier einen Rohstoff für Glas, welcher für technische Glasprodukte verwendet werden kann, im Gegensatz zu Rohstoffen für optische Glasprodukte, welche eine besonders hohe Reinheit aufweisen. Dem Fachmann ist der Unterschied zwischen technischen Rohstoffen und optischen Rohstoffen hinsichtlich ihrer Reinheit bekannt.

### Beispiele

Im Folgenden wird die Erfindung anhand von Beispielen näher erläutert.

In der folgenden Tabelle sind die Zusammensetzung von Gläsern, welche in eine LAS-Glaskeramik überführt werden können, sowie einige charakteristische Eigenschaften dieser Gläser aufgeführt. Gläser 1 und 2 sind dabei Gläser, welche in eine Glaskeramik nach Ausführungsformen der vorliegenden Erfindung überführt werden können. Weiterhin ist ein Vergleichsbeispiel VB aufgeführt.

**Tabelle 1 Zusammensetzungen von LAS-Gläsern**

| **Nr.** | | **1** | **2** | **VB** |
|---|---|---|---|---|
| **Zusammensetzung** | Gew.% | | | |
| Li₂O | | 3,83 | 3,29 | 3,71 |
| Na₂O | | 0,60 | 0,35 | 0,54 |
| K₂O | | 0,26 | 0,36 | 0,38 |
| MgO | | 0,29 | 0,54 | 0,30 |
| CaO | | 0,42 | 0,57 | 0,45 |
| SrO | | | 0,01 | |
| BaO | | 2,22 | 1,61 | 1,35 |
| ZnO | | 1,50 | 1,89 | 1,51 |
| Al₂O₃ | | 20,93 | 21,5 | 21,2 |
| SiO₂ | | 64,6 | 64,1 | 64,9 |
| TiO₂ | | 3,12 | 3,95 | 3,89 |
| ZrO₂ | | 1,39 | 0,70 | 0,69 |
| P₂O₅ | | 0,08 | 0,08 | 0,09 |
| SnO₂ | | 0,28 | 0,24 | 0,28 |
| As₂O₃ | | | | |
| Fe₂O₃ | | 0,078 | 0,100 | 0,077 |
| V₂O₅ | | | | |
| MoO₃ | | 0,016 | 0,150 | 0,022 |
| MnO₂ | | 0,028 | 0,025 | 0,028 |
| Cr₂O₃ | | | | 0,051 |
| Nd₂O₃ | | 0,34 | 0,51 | 0,59 |
| Nd₂O₃/ MoO₃ | molar | 9,09 | 1,45 | 11,5 |

| **Eigenschaften glasig** | | | | |
|---|---|---|---|---|
| Transformationstemperatur Tg | °C | 673 | 674 | 674 |
| 10² - Temperatur | °C | | | 1728 |
| Verarbeitungstemperatur V_{A} | °C | 1310 | 1300 | 1305 |
| OEG-Temperatur | °C | | | |

Die Eigenschaften der zu den Gläsern 1 und 2 sowie zu dem Glas des Vergleichsbeispiels korrespondierenden Glaskeramiken sind in der folgenden Tabelle aufgeführt:

**Tabelle 2 Eigenschaften ausgewählter LAS-Glaskeramiken**

| **Nr.** | | **GK 1** | **GK 2** | **GK VB** |
|---|---|---|---|---|
| **Glas Nr.** | | **1** | **2** | **VB** |
| **Keramisierungsprogramm** | | 1 | 1 | 1 |

| **Eigenschaften keramisiert** | | | | |
|---|---|---|---|---|
| **Transmission 4 mm Dicke Normlicht D65,** | | | | |
| 470 nm | % | 33,1 | 0,3 | 1,0 |
| 630 nm | % | 43,2 | 0,3 | 13,6 |
| 950 nm | % | 71,3 | 19,8 | 59,1 |
| 1600 nm | % | 77,6 | 62,7 | 76,1 |
| 3700 nm | % | ,49,9 | 46,1 | 50,4 |

| **Farbkoordinaten (CIE) in Transmission** | | | | |
|---|---|---|---|---|
| **Nr.** | | **GK 1** | **GK 2** | **GK VB** |
| **Glas Nr.** | | **1** | **2** | **VB** |
| x | | 0,330 | 0,308 | 0,465 |
| y | | 0,341 | 0,286 | 0,482 |
| Helligkeit Y | % | 34,8 | 0,2 | 8,3 |
| Farbabstand d | | 0,021 | 0,043 | 0,216 |

| **Farbkoordinaten (CIELAB) in Transmission** | | | | |
|---|---|---|---|---|
| L* | | 65,6 | 1,7 | 34,7 |
| a* | | 2,0 | 1,0 | 1,1 |
| b* | | 5,5 | -0,9 | 46,6 |
| c* | | 5,8 | 1,3 | 46,6 |
| **Flachheit Transmission** (Wellenlänge bei Max./Min.) | nm | 1,3 725/630 | 3,4 630/585 | 13,4 630/470 |

| **Streuung 4 mm Dicke Normlicht D65,2°** | | | | |
|---|---|---|---|---|
| Visuelle Bewertung | | 1 | 1 | 1 |
| Haze | % | 0,96 | 0,82 | 1,36 |

| **Thermische Ausdehnung** | | | | |
|---|---|---|---|---|
| **α_{20/300}** | 10⁻⁶/K | -0,28 | 0,30 | -0,02 |
| **α_{20/700}** | 10⁻⁶/K | 0,13 | 0,59 | 0,30 |

| **Röntgenbeugung** | | | | |
|---|---|---|---|---|
| Hauptkristallphase | | HQMK | HQMK | HQMK |

Hinsichtlich der beiden Ausführungsbeispiele und des Vergleichsbeispiels ist insbesondere der hohe Gehalt der Glaskeramik des Vergleichsbeispiels an der Verunreinigung Cr₂O₃ beachtlich. Dieser Gehalt ist so hoch, dass kein neutraler Farbort mehr erzielt werden kann. Aus diesem Grund handelt es sich bei der Glaskeramik des Vergleichsbeispiels um keine Ausführungsform nach der vorliegenden Schrift.

### Beschreibung der Zeichnungen

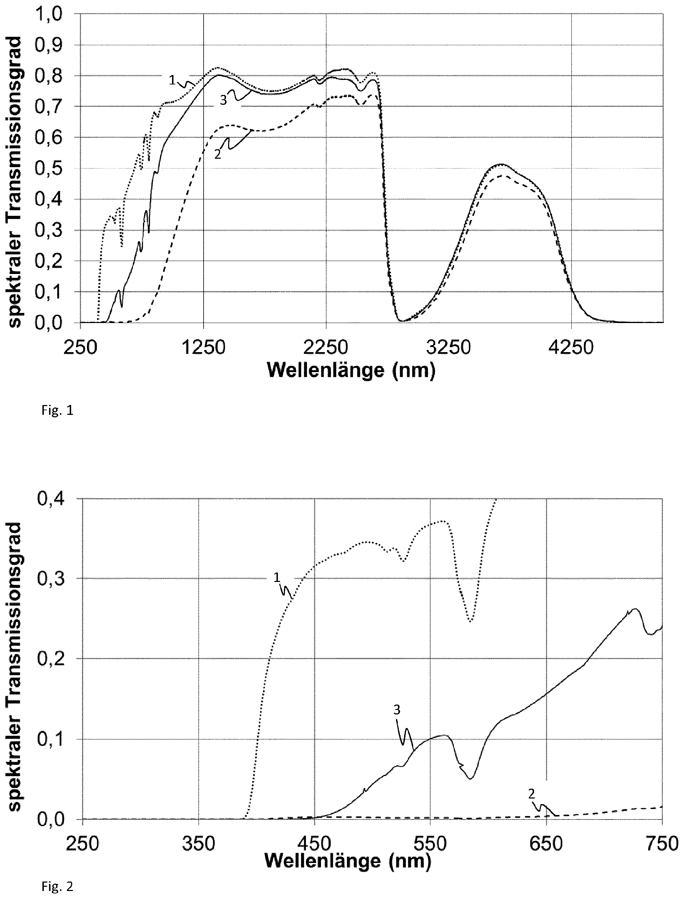

Es zeigen
- Fig.1 und 2: Transmissionsspektren unterschiedlicher Glaskeramiken.

Fig. 1 und 2 zeigen die Transmissionsspektren der Glaskeramiken 1 und 2 sowie der Glaskeramik des Vergleichsbeispiels. In Fig. 2 ist dabei ein kleinerer Wellenlängenbereich bis zu einer Wellenlänge von 750 nm als Ausschnitt des größeren Wellenlängenbereich nach Fig. 1 genauer dargestellt. Die Transmissionsspektren der Glaskeramiken 1 und 2 sind entsprechend mit den Bezugsziffern 1 und 2 bezeichnet. Das Transmissionsspektrum der Glaskeramik des Vergleichsbeispiels ist mit der Bezugsziffer 3 bezeichnet. Aufgetragen ist jeweils der spektralen Transmissionsgrad auf der y-Achse über die Wellenlängen in nm auf der x-Achse. Die Glaskeramik des Beispiels 2 zeigt eine nur sehr geringe Transmission im Sichtbaren, weist dabei aber einen neutralen Farbort auf. Die Glaskeramik des Vergleichsbeispiels weist keinen neutralen Farbort auf, wie insbesondere aus Fig. 2 ersichtlich ist.

### Bezugszeichenliste

- 1, 2: Transmissionsspektren von Glaskeramiken nach Ausführungsformen
- 3: Transmissionsspektrum einer Glaskeramik eines Vergleichsbeispiels

## Patentansprüche

1. Glaskeramik mit einem Lichttransmissionsgrad von wenigstens 0,1 % und höchstens 80 % bei 4 mm Dicke, wobei Licht der Normlichtart D65 nach Durchtritt durch die Glaskeramik bei 4 mm Dicke einen Farbort im Weißlichtbereich W1 aufweist, der im Chromatizitätsdiagramm CIExyY-2° durch folgende Koordinaten bestimmt ist:
| Weißlichtbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |
wobei die Glaskeramik eine Lithium-Aluminium-Silikat-Glaskeramik ist,
wobei die Glaskeramik transparent ist,
wobei die Glaskeramik volumengefärbt ist, und
wobei die Glaskeramik zwischen mindestens 0,003 Gew.-% und höchstens 0,4 Gew.-% MoOs umfasst und mehr als 0,2 Gew.-% Nd₂O₃ und vorzugsweise weniger als 0,8 Gew.-% Nd₂O₃,
wobei vorzugsweise das molare Verhältnis von Nd₂O₃/MoO₃ weniger als 15, vorzugsweise weniger als 10 beträgt.

2. Glaskeramik nach Anspruch 1, wobei die Glaskeramik zwischen mindestens 0,05 Gew.-% SnO₂ und höchstens 0,8 Gew.-% SnO₂ umfasst
und/oder bevorzugt zwischen mindestens 0,06 Gew.-% Fe₂O₃ und besonders bevorzugt höchstens 0,15 Gew.-% Fe₂O₃.

3. Glaskeramik nach einem der Ansprüche 1 oder 2, wobei der V₂O₅-Gehalt der Glaskeramik weniger als 0,15 Gew.-%, bevorzugt weniger als 0,01 Gew.-%, beträgt.

4. Glaskeramik nach einem der Ansprüche 1 bis 3, wobei die in Transmission mit Normlicht D65, 2° gemessene Buntheit c* im CIELAB-Farbsystem bei einer Dicke von 4 mm höchstens 21, bevorzugt höchstens 15, besonders bevorzugt höchstens 7, beträgt.

5. Glaskeramik nach einem der Ansprüche 1 bis 4, wobei die Glaskeramik einen flachen Verlauf der Transmissionskurve, bei dem das Verhältnis des höchsten Transmissionswerts zum niedrigsten Transmissionswert im Wellenlängenbereich von 470 nm bis 630 nm höchstens 2,5 beträgt, aufweist.

6. Glaskeramik nach einem der Ansprüche 1 bis 5, wobei die Glaskeramik einen spektralen Transmissionsgrad, bezogen auf eine Dicke der Glaskeramik von 4 mm, zwischen 45% und 85% bei einer Wellenlänge von 1600 nm aufweist.

7. Glaskeramik nach einem der Ansprüche 1 bis 6, wobei der TiO₂-Gehalt mehr als 1,5 Gew.-% bis höchstens 5,5 Gew.-% beträgt und/oder ZrO₂ zu höchstens 2,5 Gew.-% von der Glaskeramik umfasst ist.

8. Glaskeramik nach einem der Ansprüche 1 bis 7, wobei die Glaskeramik die folgenden Komponenten in Gew.-% enthält:
| | |
|---|---|
| Li₂O | 2 bis 5,5 |
| Al₂O₃ | 16 bis 26 |
| SiO₂ | 58 bis 72 |

9. Glaskeramik nach einem der Ansprüche 1 bis 8, wobei die Glaskeramik eine Zusammensetzung im folgenden Zusammensetzungsbereich, gegeben durch die folgenden Komponenten in Gew.-%, aufweist:
| | |
|---|---|
| Li₂O | 3 bis 5 |
| Σ(Na₂O+K₂O) | 0,1 bis weniger als 4 |
| MgO | 0 bis 3 |
| Σ(CaO+BaO+SrO) | 0 bis 5 |
| ZnO | 0 bis 4 |
| B₂O₃ | 0 bis 3 |
| Al₂O₃ | 18 bis 25 |
| SiO₂ | 60 bis 70 |
| TiO₂ | 1,5 bis 5,5 |
| ZrO₂ | 0 bis 2,5, vorzugsweise zwischen 0,3 und vorzugsweise weniger als 2,2 |
| SnO₂ | 0,1 bis weniger als 0,7 |
| Σ(TiO₂+ZrO₂+SnO₂) | 3 bis 6,5 |
| P₂O₅ | 0 bis 5 |
| MoOs | 0,01 bis 0,3 |
| Fe₂O₃ | 0,06 bis 0,15 |
| Nd₂O₃ | mehr als 0,2 bis weniger als 0,8 |
| V₂O₅ | 0 bis 0,02, |
oder
wobei die Glaskeramik eine Zusammensetzung im folgenden Zusammensetzungsbereich, gegeben durch die folgenden Komponenten in Gew.-%, aufweist:
| | |
|---|---|
| Li₂O | 3 bis 5 |
| Σ(Na₂O+K₂O) | 0,2 bis weniger als 3 |
| MgO | 0 bis 1,5 |
| Σ(CaO+BaO+SrO) | 0,2 bis 4 |
| ZnO | 0 bis 3 |
| B₂O₃ | 0 bis 2 |
| Al₂O₃ | 18 bis 24 |
| SiO₂ | 60 bis 69 |
| TiO₂ | 1,5 bis 5,5 |
| ZrO₂ | 0 bis 2,5, vorzugsweise zwischen 0,3 und vorzugsweise weniger als 2,2 |
| SnO₂ | 0,1 bis weniger als 0,7 |
| Σ(TiO₂+ZrO₂+SnO₂) | 3 bis 6,5 |
| P₂O₅ | 0 bis 3 |
| MoOs | 0,01 bis 0,25 |
| Fe₂O₃ | 0,06 bis 0,15 |
| Nd₂O₃ | mehr als 0,2 bis weniger als 0,8 |
| V₂O₅ | 0 bis weniger als 0,01 |

10. Glaskeramik nach einem der Ansprüche 1 bis 9, wobei die Glaskeramik bis auf unvermeidbare Spuren kein Arsenoxid und/oder Antimonoxid umfasst.

11. Glaskeramik nach einem der Ansprüche 1 bis 10, wobei die Glaskeramik als Hauptkristallphase Hochquarz-Mischkristalle umfasst.

12. Verfahren zur Herstellung eines Formkörpers aus einer Glaskeramik, insbesondere nach einem der Ansprüche 1 bis 11, umfassend die Schritte:
a) Bereitstellen eines Gemengesatzes aus technischen Rohstoffen enthaltend zwischen 20 Gew.- % und 80 Gew.-% Scherben,
b) Schmelzen des Gemengesatzes und Läutern bei Temperaturen, die mindestens 1600°C erreichen,
c) Einstellen eines reduzierten Zustandes in der Glasschmelze, bei dem keine Kristalle im Glas gebildet werden,
d) Abkühlen der Glasschmelze und Formgeben bei mittels Walzen oder Floaten, wobei insbesondere das Walzen bei Temperaturen in der Nähe der Verarbeitungstemperatur V_{A}, beispielsweise in einem Temperaturbereich von ±200 K um V_{A}, vorzugsweise ±100 K um V_{A}, erfolgen kann, unter Erhalt eines Formkörpers aus kristallisierbarem Glas,
e) Kühlen in einem Entspannungsofen auf Raumtemperatur, wobei unerwünschte Spannungen im glasigen Formkörper entfernt werden,
f) Erhöhen der Temperatur des Formkörpers aus kristallisierbarem Glas auf den Temperaturbereich von etwa 680°C innerhalb von 3 Minuten bis 60 Minuten,
g) Erhöhen der Temperatur des Formkörpers aus kristallisierbarem Glas innerhalb des Temperaturbereichs der Keimbildung von 680°C bis 800°C über einen Zeitraum von etwa 10 Minuten bis 100 Minuten, sodass ein Formkörper aus Glas enthaltend und/oder umfassend Kristallisationskeime erhalten wird,
h) Erhöhen der Temperatur des Formkörpers aus Kristallisationskeime enthaltendem oder umfassendem Glas innerhalb von 5 Minuten bis 80 Minuten Dauer in den Temperaturbereich 850°C bis 980°C,
i) Halten des Temperaturbereichs bei der maximalen Temperatur von 850°C bis 980°C bis zu 60 Minuten, sodass ein Formkörper aus Glaskeramik erhalten wird, sowie
j) Abkühlen des Formkörpers aus Glaskeramik auf Raumtemperatur in weniger als 150 Minuten, wobei die Keramisierung eine Gesamtdauer von weniger als 300 Minuten aufweist.

13. Verwendung eines Formkörpers, der eine Glaskeramik nach einem der Ansprüche 1 bis 11 umfasst, als Kochgeschirr, Kaminsichtscheibem Koch-, Grill- und/oder Bratfläche, in einer Brandschutzverglasung, als Backofensichtscheibe, insbesondere für Pyrolyseherde, als Abdeckung im Beleuchtungssektor, als Sicherheitsglas, optional in einem Laminatverbund, als Trägerplatte oder als Ofenauskleidung in thermischen Prozessen.

14. Verwendung eines Formkörpers nach Anspruch 13 als dunkel gefärbte Kochfläche, wobei der Formkörper eine Platte mit einer Dicke von 2,5 mm bis 6 mm und einer Lichttransmission zwischen 1,5 % bis weniger als 5 % ist, ohne Verwendung von aufgebrachten Farbfiltern und/oder -schichten zur Korrektur des Farbortes des durchgestrahlten Lichts.

15. Verwendung eines Formkörpers nach Anspruch 13 als gefärbte Kochfläche, wobei der Formkörper eine Platte mit einer Dicke von 2,5 mm bis 6 mm und einer Lichttransmission zwischen 5 % bis 80 % ist, wobei die Platte eine als blickdichte Ober- und/oder Unterseitenbeschichtung ausgeführte Maskierung aufweist, und ohne Verwendung von aufgebrachten Farbfiltern und/oder-schichten zur Korrektur des durchgestrahlten Lichts.

## Claims

1. A glass ceramic having a light transmittance of at least 0.1 % and at most 80 % at a thickness of 4 mm, wherein light of standard illuminant D65, after passing through the glass ceramic at a thickness of 4 mm, has a colour locus in the white light range W1, which in the chromaticity diagram CIExyY-2° is determined by the following coordinates:
| White light range W1 | |
|---|---|
| X | y |
| 0.27 | 0.21 |
| 0.22 | 0.25 |
| 0.32 | 0.37 |
| 0.45 | 0.45 |
| 0.47 | 0.34 |
| 0.36 | 0.29, |
wherein the glass ceramic is a lithium aluminium silicate glass ceramic;
wherein the glass ceramic is transparent;
wherein the glass ceramic is bulk-coloured; and
wherein the glass ceramic comprises between at least 0.003 wt% and at most 0.4 wt% of MoOs, and more than 0.2 wt% of Nd₂O₃ and preferably less than 0.8 wt% of Nd₂O₃, preferably with a Nd₂O₃/MoO₃ molar ratio of less than 15, preferably less than 10.

2. The glass ceramic according to claim 1, wherein the glass ceramic comprises between at least 0.05 wt% of SnO₂ and at most 0.8 wt% of SnO₂;
and/or preferably between at least 0.06 wt% of Fe₂O₃ and particularly preferably at most 0.15 wt% of Fe₂O₃.

3. The glass ceramic according to any one of claims 1 or 2, wherein the V₂O₅ content of the glass ceramic is less than 0.15 wt%, preferably less than 0.01 wt%.

4. The glass ceramic according to any one of claims 1 to 3, which, at a thickness of 4 mm, exhibits a chroma c* in the CIELAB colour system of at most 21, preferably at most 15, most preferably at most 7, as measured in transmission using standard illuminant D65, 2°.

5. The glass ceramic according to any one of claims 1 to 4, wherein the glass ceramic has a transmittance curve with a flat profile in which a ratio of the highest transmittance value to the lowest transmittance value within the wavelength range from 470 nm to 630 nm is at most 2.5.

6. The glass ceramic according to any one of claims 1 to 5, wherein at a wavelength of 1600 nm, the glass ceramic has a spectral transmittance between 45 % and 85 %, based on a thickness of the glass ceramic of 4 mm.

7. The glass ceramic according to any one of claims 1 to 6, wherein the TiO₂ content is more than 1.5 wt% to at most 5.5 wt%, and/or wherein the glass ceramic comprises at most 2.5 wt% of ZrO₂.

8. The glass ceramic according to any one of claims 1 to 7, wherein the glass ceramic contains the following components, in wt%:
| | |
|---|---|
| Li₂O | 2 to 5.5 |
| Al₂O₃ | 16 to 26 |
| SiO₂ | 58 to 72 |

9. The glass ceramic according to any one of claims 1 to 8, wherein the glass ceramic has a composition in the following composition range, given by the following components in wt%:
| | |
|---|---|
| Li₂O | 3 to 5 |
| Σ(Na₂O+K₂O) | 0.1 to less than 4 |
| MgO | 0 to 3 |
| Σ(CaO+BaO+SrO) | 0 to 5 |
| ZnO | 0 to 4 |
| B₂O₃ | 0 to 3 |
| Al₂O₃ | 18 to 25 |
| SiO₂ | 60 to 70 |
| TiO₂ | 1.5 to 5.5 |
| ZrO₂ | 0 to 2.5, preferably between 0.3 and preferably less than 2.2 |
| SnO₂ | 0.1 to less than 0.7 |
| Σ(TiO₂+ZrO₂+SnO₂) | 3 to 6.5 |
| P₂O₅ | 0 to 5 |
| MoOs | 0.01 to 0.3 |
| Fe₂O₃ | 0.06 to 0.15 |
| Nd₂O₃ | more than 0.2 to less than 0.8 |
| V₂O₅ | 0 to 0.02; |
or
wherein the glass ceramic has a composition in the following composition range, given by the following components in wt%:
| | |
|---|---|
| Li₂O | 3 to 5 |
| Σ(Na₂O+K₂O) | 0.2 to less than 3 |
| MgO | 0 to 1.5 |
| Σ(CaO+BaO+SrO) | 0.2 to 4 |
| ZnO | 0 to 3 |
| B₂O₃ | 0 to 2 |
| Al₂O₃ | 18 to 24 |
| SiO₂ | 60 to 69 |
| TiO₂ | 1.5 to 5.5 |
| ZrO₂ | 0 to 2.5, preferably between 0.3 and preferably less than 2.2 |
| SnO₂ | 0.1 to less than 0.7 |
| Σ(TiO₂+ZrO₂+SnO₂) | 3 to 6.5 |
| P₂O₅ | 0 to 3 |
| MoO₃ | 0.01 to 0.25 |
| Fe₂O₃ | 0.06 to 0.15 |
| Nd₂O₃ | more than 0.2 to less than 0.8 |
| V₂O₅ | 0 to less than 0.01 |

10. The glass ceramic according to any one of claims 1 to 9, wherein the glass ceramic does not contain any arsenic oxide and/or antimony oxide except for unavoidable traces.

11. The glass ceramic according to any one of claims 1 to 10, wherein the glass ceramic comprises high quartz solid solution as the main crystal phase.

12. A method for producing a shaped body made of a glass ceramic in particular according to any one of claims 1 to 11, comprising the steps of:
a) providing a batch of technical raw materials containing between 20 wt% and 80 wt% of cullets;
b) melting the batch and refining at temperatures reaching at least 1600 °C;
c) adjusting a reduced state in the molten glass, in which no crystals form in the glass;
d) cooling the molten glass and shaping using rollers or by floating, wherein in particular the rolling can be performed at temperatures close to the processing temperature V_{A}, for example in a temperature range of ±200 K around V_{A}, preferably ±100 K around V_{A}, to obtain a shaped body made of crystallizable glass;
e) cooling to room temperature in a lehr, thereby relieving undesirable stresses in the glassy shaped body;
f) increasing the temperature of the shaped body made of crystallizable glass to a temperature range of about 680 °C during between 3 minutes and 60 minutes;
g) increasing the temperature of the shaped body made of crystallizable glass within the temperature range of nucleation from 680 °C to 800 °C over a duration between about 10 minutes and 100 minutes so as to obtain a shaped body made of glass, which contains and/or comprises crystallization nuclei;
h) increasing the temperature of the shaped body made of glass that contains or comprises crystallization nuclei over a duration between 5 minutes and 80 minutes to the temperature range between 850 °C and 980 °C;
i) holding the temperature range at the maximum temperature of 850 °C to 980 °C for up to 60 minutes, so as to obtain a shaped body made of glass ceramic; and
j) cooling the shaped body made of glass ceramic to room temperature over less than 150 minutes;
wherein the total duration of ceramization amounts to less than 300 minutes.

13. Use of a shaped body which comprises a glass ceramic according to any one of claims 1 to 11 as cookware, fireplace viewing windows, for cooking, grilling and/or roasting surfaces, for fire-resistant glazing, as an oven viewing pane, in particular for pyrolysis ovens, as a cover in the lighting sector, as safety glass, optionally in a laminated composite, as a support panel, or as a furnace lining in thermal processes.

14. Use of a shaped body according to claim 13 as a dark-coloured cooking surface, wherein the shaped body is a panel having a thickness of 2.5 mm to 6 mm and a light transmittance of between 1.5 % and less than 5 %, without the use of any applied colour filters and/or coloured layers for correcting the colour locus of the transmitted light.

15. Use of a shaped body according to claim 13 as a coloured cooking surface, wherein the shaped body is a panel having a thickness of 2.5 mm to 6 mm and a light transmittance between 5 % and 80 %, wherein the panel comprises a masking in the form of an opaque upper surface coating and/or underside coating, and without the use of any applied colour filters and/or coloured layers for correcting the transmitted light.

## Revendications

1. Vitrocéramique présentant un facteur de transmission lumineuse d'au minimum 0,1 % et d'au maximum 80 %, pour une épaisseur de 4 mm, sachant qu'une lumière de type illuminant normalisé D65 présente, après passage à travers la vitrocéramique, pour une épaisseur de 4 mm, un point de chromaticité dans la gamme de lumière blanche W1, qui est déterminé par les coordonnées suivantes dans le diagramme de chromaticité CIExyY-2° :
| Gamme de lumière blanche W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |
où la vitrocéramique est une vitrocéramique à base de lithium-aluminium-silicate,
où la vitrocéramique est transparente,
où la vitrocéramique est teintée dans la masse, et
où la vitrocéramique comprend entre au minimum 0,003 % en poids et au maximum 0,4 % en poids de MoO₃ et plus de 0,2 % en poids de Nd₂O₃ et de préférence moins de 0,8 % en poids de Nd₂O₃, le rapport molaire de Nd₂O₃/MoO₃ étant de préférence inférieur à 15, de préférence inférieur à 10.

2. Vitrocéramique selon la revendication 1, dans laquelle la vitrocéramique comprend entre au minimum 0,05 % en poids de SnO₂ et au maximum 0,8 % en poids de SnO₂ et/ou de préférence entre au minimum 0,06 % en poids de Fe₂O₃ et de manière particulièrement avantageuse au maximum 0,15 % en poids de Fe₂O₃.

3. Vitrocéramique selon l'une des revendications 1 ou 2, dans laquelle la teneur en V₂O₅ de la vitrocéramique est inférieure à 0,15 % en poids, de préférence inférieure à 0,01 % en poids.

4. Vitrocéramique selon l'une des revendications 1 à 3, dans laquelle la saturation c^{∗} dans le système de couleurs CIELAB, mesurée en transmission avec de l'illuminant normalisé D65,2°, pour une épaisseur de 4 mm, est au maximum de 21, de préférence au maximum de 15, et de manière particulièrement avantageuse au maximum de 7.

5. Vitrocéramique selon l'une des revendications 1 à 4, dans laquelle la vitrocéramique présente un tracé plat de la courbe de transmission, où le rapport de la valeur de transmission maximale à la valeur de transmission minimale, dans la plage de longueurs d'onde allant de 470 nm à 630 nm, est au maximum de 2,5.

6. Vitrocéramique selon l'une des revendications 1 à 5, dans laquelle la vitrocéramique présente un facteur de transmission spectral, rapporté à une épaisseur de 4 mm de la vitrocéramique, qui est compris entre 45 % et 85 %, pour une longueur d'onde de 1 600 nm.

7. Vitrocéramique selon l'une des revendications 1 à 6, dans laquelle la teneur en TiO₂ est supérieure à 1,5 % en poids, allant au maximum jusqu'à 5,5 % en poids, et/ou ZrO₂ est contenu pour au maximum 2,5 % en poids dans la vitrocéramique.

8. Vitrocéramique selon l'une des revendications 1 à 7, dans laquelle la vitrocéramique contient les constituants suivants en % en poids :
| | |
|---|---|
| Li₂O | 2 à 5,5 |
| Al₂O₃ | 16 à 26 |
| SiO₂ | 58 à 72. |

9. Vitrocéramique selon l'une des revendications 1 à 8, dans laquelle la vitrocéramique présente une composition dans le domaine de composition suivant, établi par les constituants suivants, en % en poids :
| | |
|---|---|
| Li₂O | 3 à 5 |
| Σ(Na₂O+K₂O) | 0,1 à moins de 4 |
| MgO | 0 à 3 |
| Σ(CaO+BaO+SrO) | 0 à 5 |
| ZnO | 0 à 4 |
| B₂O₃ | 0 à 3 |
| Al₂O₃ | 18 à 25 |
| SiO₂ | 60 à 70 |
| TiO₂ | 1,5 à 5,5 |
| ZrO₂ | 0 à 2,5, de préférence entre 0,3 et de préférence moins de 2,2 |
| SnO₂ | 0,1 à moins de 0,7 |
| Σ(TiO₂+ZrO₂+SnO₂) | 3 à 6,5 |
| P₂O₅ | 0 à 5 |
| MoOs | 0,01 à 0,3 |
| Fe₂O₃ | 0,06 à 0,15 |
| Nd₂O₃ | plus de 0,2 à moins de 0,8 |
| V₂O₅ | 0 à 0,02, |
ou
dans laquelle la vitrocéramique présente une composition dans le domaine de composition suivant, établi par les constituants suivants, en % en poids :
| | |
|---|---|
| Li₂O | 3 à 5 |
| Σ(Na₂O+K₂O) | 0,2 à moins de 3 |
| MgO | 0 à 1,5 |
| Σ(CaO+BaO+SrO) | 0,2 à 4 |
| ZnO | 0 à 3 |
| B₂O₃ | 0 à 2 |
| Al₂O₃ | 18 à 24 |
| SiO₂ | 60 à 69 |
| TiO₂ | 1,5 à 5,5 |
| ZrO₂ | 0 à 2,5, de préférence entre 0,3 et de préférence moins de 2,2 |
| SnO₂ | 0,1 à moins de 0,7 |
| Σ(TiO₂+ZrO₂+SnO₂) | 3 à 6,5 |
| P₂O₅ | 0 à 3 |
| MoO₃ | 0,01 à 0,25 |
| Fe₂O₃ | 0,06 à 0,15 |
| Nd₂O₃ | plus de 0,2 à moins de 0,8 |
| V₂O₅ | 0 à moins de 0,01. |

10. Vitrocéramique selon l'une des revendications 1 à 9, dans laquelle la vitrocéramique ne comprend pas d'oxyde d'arsenic et/ou d'oxyde d'antimoine, à l'exception de traces inévitables.

11. Vitrocéramique selon l'une des revendications 1 à 10, dans laquelle la vitrocéramique comprend des cristaux mixtes de quartz β en tant que phase cristalline principale.

12. Procédé de fabrication d'un corps moulé à partir d'une vitrocéramique, en particulier selon l'une des revendications 1 à 11, comprenant les étapes suivantes :
a) mise à disposition d'un mélange vitrifiable constitué de matières premières techniques, contenant entre 20 % en poids et 80 % en poids de calcin,
b) mise en fusion du mélange vitrifiable et affinage à des températures atteignant au moins 1 600 °C,
c) réglage d'un état réduit dans le verre fondu, dans lequel il n'y a pas de formation de cristaux dans le verre,
d) refroidissement du verre fondu et mise en forme par laminage ou flottage, sachant que notamment le laminage peut s'effectuer à des températures proches de la température de mise en oeuvre V_{A}, par exemple dans une plage de températures de + 200 K autour de V_{A}, de préférence ± 100 K autour de V_{A}, avec obtention d'un corps moulé en verre cristallisable,
e) refroidissement dans un four de recuit, jusqu'à la température ambiante, où des contraintes indésirables sont éliminées dans le corps moulé vitreux,
f) élévation de la température du corps moulé en verre cristallisable, jusqu'à la plage de températures d'environ 680 °C, en l'espace de 3 à 60 minutes,
g) élévation de la température du corps moulé en verre cristallisable, dans la plage de températures de nucléation allant de 680 °C à 800 °C, pendant un laps de temps d'environ 10 à 100 minutes, de sorte que l'on obtient un corps moulé en verre contenant et/ou comprenant des germes de cristallisation,
h) élévation de la température du corps moulé en verre contenant ou comportant des germes de cristallisation, en l'espace d'une durée de 5 à 80 minutes, jusque dans la plage de températures allant de 850 °C à 980 °C,
i) maintien de la plage de température à la température maximale de 850 °C à 980 °C, jusqu'à 60 minutes, de manière à obtenir un corps moulé en vitrocéramique, et
j) refroidissement du corps moulé en vitrocéramique jusqu'à la température ambiante, en moins de 150 minutes, la céramisation présentant une durée totale de moins de 300 minutes.

13. Utilisation d'un corps moulé comprenant une vitrocéramique selon l'une des revendications 1 à 11, comme ustensiles de cuisson, vitres de cheminée, surface de cuisson, pour grillades ou pour faire saisir des aliments, dans une vitre anti-feu, comme vitre de four, notamment pour des fours à pyrolyse, comme recouvrement dans le domaine de l'éclairage, comme verre de sécurité, de manière facultative dans une structure composite stratifiée, comme plaque de support ou comme garnissage de four dans des processus thermiques.

14. Utilisation d'un corps moulé selon la revendication 13, comme surface de cuisson teintée d'une couleur foncée, le corps moulé étant une plaque d'une épaisseur allant de 2,5 mm à 6 mm et avec une transmission lumineuse comprise entre 1,5 % et moins de 5 %, sans utilisation de filtres et/ou de couches de couleur appliqués en vue de la correction du point de chromaticité de la lumière transmise.

15. Utilisation d'un corps moulé selon la revendication 13, comme surface de cuisson teintée, le corps moulé étant une plaque d'une épaisseur allant de 2,5 mm à 6 mm et avec une transmission lumineuse comprise entre 5 % et jusqu'à 80 %, la plaque présentant un masque réalisé sous forme de revêtement opaque de face supérieure et/ou inférieure, et sans utilisation de filtres et/ou de couches de couleur appliqués en vue de la correction de la lumière transmise.
